(19) Europäisches Patentamt
European Patent Office
Office européen des brevets

(11) **EP 2 469 722 A2**

(12) **EUROPEAN PATENT APPLICATION**
published in accordance with Art. 153(4) EPC

(43) Date of publication:
**27.06.2012  Bulletin 2012/26**

(21) Application number: **10810171.8**

(22) Date of filing: **19.08.2010**

(51) Int Cl.:
**H04B 7/02** *(2006.01)*          **H04B 1/14** *(2006.01)*

(86) International application number:
**PCT/KR2010/005490**

(87) International publication number:
**WO 2011/021863 (24.02.2011 Gazette 2011/08)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **19.08.2009   KR 20090076940**

(71) Applicant: **Pantech Co., Ltd.**
**Seoul 121-270 (KR)**

(72) Inventor: **PARK, Kyoungmin**
**Goyang-si**
**Gyeonggi-do 441-440 (KR)**

(74) Representative: **Herzog, Markus et al**
**Weickmann & Weickmann**
**Postfach 860820**
**81635 München (DE)**

(54) **METHOD FOR TRANSMITTING DATA IN WIRELESS COMMUNICATION SYSTEM, TRANSMITTING DEVICE THEREFOR, AND RECEIVING DEVICE AND RECEIVING METHOD THEREFOR**

(57)    Disclosed are a method for transmitting data in a wireless communication system and a transmitting device therefor.

EP 2 469 722 A2

**Description**

Technical Field

The present invention relates to a method and a device for transmitting data in a wireless communication system, and a receiving device and a receiving method thereof.

Background Art

With the development of a communication system, consumers such as companies and individuals have used a wide variety of wireless terminals.

Accordingly, communication service providers have continued to attempt to create a new communication service market for wireless terminals, and expand the existing communication service market by providing reliable and low-cost services.

Disclosure

Technical Problem

Therefore, the present invention has been made in view of the above-mentioned problems, and the present invention provides a wireless communication system in which a transmitter side can increase precoding gain and a receiver side can increase diversity gain according to the increase or reduction of a channel rank.

Technical solution

In order to accomplish the above-mentioned objects, in accordance with an aspect of the present invention, there is provided a method for transmitting information in a wireless communication system, the method including: mapping encoded bits to one or more layers; transmitting the mapped bits; mapping the encoded bits to layers, the number of which is different from the number of the layers used in the previous transmission when the mapped bits are retransmitted due to failure of reception of the mapped bits; and retransmitting the mapped bits.

In accordance with another aspect of the present invention, there is provided a transmitting device in a wireless communication system, the transmitting device including: a layer mapper for mapping encoded bits to one or more layers, and mapping the encoded bits to layers, the number of which is different from the number of previously used layers, when the encoded bits are retransmitted due to failure of reception of the mapped bits; and a transmission unit for first transmitting the mapped bits, and retransmitting the encoded bits mapped to layers, the number of which is different from the number of the layers used in the previous transmission, when the encoded bits are retransmitted due to the failure of the reception of the mapped bits.

In accordance with another aspect of the present invention, there is provided a receiving device in a wireless communication system, the receiving device including: a resource demapper for demapping a resource element to a complex modulation symbol; a post-precoder for post-decoding a complex modulation symbol mapped to a resource element; a layer demapper for demapping the complex modulation symbol to one layer or two or more layers; and a demodulator for demodulating the complex modulation symbol demapped to each layer to scrambled bits, wherein the demodulator combines a first transmitted signal with a retransmitted signal in order to perform chase combining before and after each of the resource demapper, the post-precoder, and the layer demapper.

In accordance with another aspect of the present invention, there is provided a method for receiving information in a wireless communication system, the method including: receiving a signal during first transmission; receiving a signal during retransmission; and performing chase combining on two repeated signals, which have been generated by layer division from the signal received during the retransmission, and the signal received during the first transmission.

In accordance with another aspect of the present invention, there is provided a method for transmitting information by a transmitting device in a wireless communication system transmitting information by using at least two antenna ports, the method including: mapping bits to be transmitted to at least one layer; replicating the bits mapped to the at least one layer, and mapping the replicated bits to another layer; and transmitting the bits, which have been mapped to the at least one layer and are replicated and are then mapped to another layer, to a receiving device.

In accordance with another aspect of the present invention, there is provided a transmitting device in a wireless communication system transmitting information by using at least two antenna ports, the transmitting device including: a layer mapper for mapping bits to be transmitted to at least one layer, and replicating the bits mapped to the at least one layer and mapping the replicated bits to another layer; and a transmission unit for transmitting the bits which have been mapped to the at least one layer, and are replicated and are then mapped to another layer.

In accordance with another aspect of the present invention, there is provided a method for adapting a layer by a transmitting device in a wireless communication system transmitting information by using at least two antenna ports, the method including: mapping bits to be transmitted to at least one layer; and replicating the bits mapped to the at least one layer and mapping the replicated bits to another layer, when more layers are usable.

In accordance with another aspect of the present invention, there is provided a method for receiving information by a receiving device in a wireless communication system transmitting information by using at least two antenna ports, the method including: receiving at least one bit, which is mapped to at least one layer and is then transmitted through the at least one layer, and at least one bit, which is obtained by replicating the former at least one bit and is mapped to another layer, and is then transmitted through another layer; and performing chase combining on the at least two received bits.

Brief Description of the Drawings

The foregoing and other objects, features and advantages of the present invention will become more apparent from the following detailed description when taken in conjunction with the accompanying drawings in which:

FIG. 1 is a view schematically illustrating the configuration of a wireless communication system to which embodiments of the present invention are applied;
FIG. 2 is a block diagram illustrating the configuration of a transmitting device according to an embodiment of the present invention;
FIG. 3 is a block diagram illustrating an attempt for the first transmission on a rank 2 channel by a transmitting device;
FIG. 4 is a block diagram illustrating an example where a transmitting device retransmits a packet through four layers if a channel rank increases to 4 when the transmitting device retransmits a packet;
FIG. 5 is a block diagram illustrating another example where a transmitting device retransmits a packet through four layers if a channel rank increases to 4 when the transmitting device retransmits a packet;
FIG. 6 is a block diagram illustrating a structure for signal generation of a downlink physical channel in a wireless communication system according to embodiments of the present invention;
FIG. 7 is a block diagram illustrating the configuration of a receiving device in a wireless communication system according to an embodiment of the present invention;
FIG. 8 and FIG. 9 are views showing the concept of chase combining a received signal during the first transmission and a received signal during retransmission, by a receiving device; and
FIG. 10 is a graph obtained by comparing SNR after MMSE (Minimum Mean Square Error) in the case of transmitting information by using only two layers, with SNR (Signal-to-Noise Ratio) after a usually used MMSE precoding in the case of transmitting information by using two layers or by using four layers through layer repetition according to channel conditions.

Best Mode

Mode for Invention

Hereinafter, exemplary embodiments of the present invention will be described in detail with reference to the accompanying drawings. It should be noted that in assigning reference numerals to elements in the drawings, the same elements will be designated by the same reference numerals although they are shown in different drawings. Further, in the following description of the present invention, a detailed description of known functions and configurations incorporated herein will be omitted when it may make the subject matter of the present invention rather unclear.

In addition, terms, such as first, second, A, B, (a), (b) or the like may be used herein when describing components of the present invention. Each of these terminologies is not used to define an essence, order or sequence of a corresponding component but used merely to distinguish the corresponding component from other component(s). It should be understood that if it is described in the specification that one component is "connected," "coupled" or "joined" to another component, a third component may be "connected," "coupled," and "joined" between the first and second components, although the first component may be directly connected, coupled or joined to the second component.

In this specification, a term, such as bit, information or data are used for an object of transmission or reception. Although the terms are differently used according the difference between layers of a method or device, transmission methods and transmission mediums, the terms may be essentially used in the same meaning. When it is especially necessary to discriminate between the terms, they may be used in different meanings.

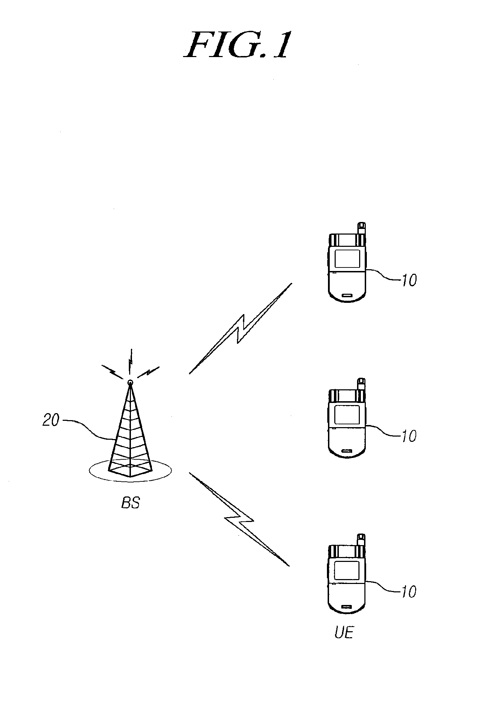

FIG. 1 is a view schematically illustrating the configuration of a wireless communication system to which embodiments of the present invention are applied.

The wireless communication system is widely arranged in order to provide various communication services, such as voice, packet data, etc.

Referring to FIG. 1, the wireless communication system includes a User Equipment (UE) 10 and a Base Station (BS) (20). The user equipment 10 and the base station 20 use various methods for allocating resources, which will be described below.

In this specification, the User Equipment (UE) 10 has a comprehensive concept implying a user terminal in wireless communication. Accordingly, the UEs should be interpreted as having the concept of including a MS (Mobile Station), a UT (User Terminal), an SS (Subscriber Station), a wireless device, and the like in GSM (Global System for Mobile Communications) as well as UEs (User Equipments) in WCDMA (Wideband Code Division Multiple Access), LTE (Long Term Evolution), HSPA (High Speed Packet Access), etc.

The base station 20 or a cell usually refers to a fixed station communicating with the user equipment 10, and may be called different terms, such as a Node-B, an eNB (evolved Node-B), a BTS (Base Transceiver System), and an AP (Access Point).

Namely, in this specification, the base station 20 or the cell should be interpreted as having a comprehensive meaning indicating a partial area covered by a BSC (Base Station Controller) in CDMA (Code Division Multiple Access) or a Node-B in WCDMA (Wideband Code Division Multiple Access). Accordingly, the base station 20 or the cell has a meaning including various coverage areas such as a mega cell, a macro cell, a micro cell, a pico cell, and a femto cell.

In this specification, the user equipment 10 and the base station 20, which are two transmission and reception subjects used to implement the art or the technical idea described in this specification, are used as a comprehensive meaning, and are not limited by a particularly designated term or word.

There is no limit to multiple access schemes applied to the wireless communication system. For example, use may be made of various multiple access schemes, such as CDMA (Code Division Multiple Access), TDMA (Time Division Multiple Access), FDMA (Frequency Division Multiple Access), OFDMA (Orthogonal Frequency Division Multiple Access), OFDM-FDMA, OFDM-TDMA, and OFDM-CDMA.

In this respect, use may be made of a TDD (Time Division Duplex) scheme in which uplink transmission and downlink transmission are performed at different times. Otherwise, use may be made of an FDD (Frequency Division Duplex) scheme in which uplink transmission and downlink transmission are performed by using different frequencies.

A technology of allocating resources according to an embodiment of the present invention may be applied to the allocation of resources in the field of asynchronous wireless communications which have gone through GSM, WCDMA and HSPA, and evolve into LTE (Long Term Evolution) and LTE-advanced, and in the field of synchronous wireless communications which evolve into CDMA, CDMA-2000 and UMB. The present invention should not be interpreted as being limited to or restricted by a particular wireless communication field, and should be interpreted as including all technical fields to which the spirit of the present invention can be applied.

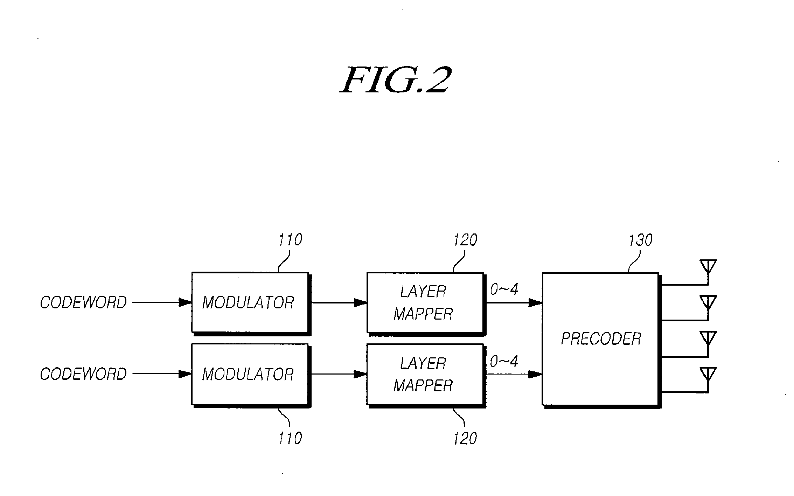

FIG. 2 is a block diagram illustrating the configuration of a transmitting device according to an embodiment of the present invention.

Referring to FIG. 2, the wireless communication system to which embodiments of the present invention are applied, includes an encoder and modulator 110, a layer mapper 120, and a precoder 130. The wireless communication system may be a communication system or a transmitting device of the base station 20 shown in FIG. 1.

Bits which go through channel coding and are input in the form of codewords in a downlink, are scrambled by a scrambler and are then input to the encoder and modulator 110. The encoder and modulator 110 modulate the scrambled bits to a complex modulation symbol, and the layer mapper 120 maps the complex modulation symbol to one transmission layer or multiple transmission layers. Then, the precoder 130 precodes the complex modulation symbol on each transmission channel of an antenna port. Then, a resource element mapper maps a complex modulation symbol for each antenna port to a relevant resource element.

Thereafter, an OFDM (Orthogonal Frequency Division Multiplexing) signal generator generates a complex time domain OFDM signal for each antenna. The generated complex time domain OFDM signal is transmitted through the relevant antenna port.

The structure for signal generation of the downlink physical channel in the wireless communication system, to which embodiments of the present invention are applied, has been described as described above with reference to FIG. 2. However, the present invention is not limited to this configuration. Namely, in the structure for signal generation of the downlink physical channel in the wireless communication system, to which embodiments of the present invention are applied, other elements, which are different from the elements as described above, may be omitted, the elements may be replaced or changed with other elements, or other elements may be further included.

After information on a packet-by-packet basis to be transmitted is delivered by using a codeword, a packet is generated through a process, and the generated packet is delivered to a receiver side by transmitting the generated packet once or multiple times. Herein, the term "codeword" refers to a block of channel encoded symbols. Accordingly, although information is transmitted by using two codewords as shown in FIG. 2, information may be transmitted by using one or more codewords, or in a unit other than a codeword unit, and this configuration is identically applied to the other accompanying drawings.

After the transmitting device first transmits a packet, it receives an ACK/NACK (acknowledgement/negative acknowledgement) from a receiving device. When the transmitting device receives an ACK from the receiving device, it transmits the next packet. In contrast, when the transmitting device receives a NACK from the receiving device, it retransmits a packet identical to the first transmitted one. The Hybrid Automatic Repeat reQuest (HARQ) operation as described above disregards mistakenly received packets, and requests retransmission. However, although it is impossible to decode packets, when considering that the received signal includes information, the disregard of the mistakenly received packets causes the loss of information. Such a disadvantage can be overcome by HARQ with soft combining.

The HARQ with soft combining can be classified into chase combining and incremental redundancy according to whether retransmitted bits are required to be identical to the first transmitted bits.

In the chase combining, bits to be retransmitted include bits identically encoded in the case of the first transmission. After the transmitting device retransmits the bits, the receiving device combines each of the received channel bits with the corresponding bit, which has previously been transmitted. Then, the receiving device causes the combined signal to be provided to a decoder, so as to use a maximum ratio combining. Because each of the retransmissions is a copy identical to the first transmission, the retransmissions each having chase combining may appear to have an additional repetition code. Meanwhile, in order to use chase combining, signals used in the first transmission and the retransmission must have formats identical to each other.

Specifically, the number of layers used by each packet during layer mapping is determined by a rank of a channel and the importance of each codeword. In order to use chase combining, when the transmitting device retransmits a packet, an identical number of layers must be used for an identical packet.

Mapping a codeword $x_0$ to two layers $y_0$ and $y_1$ is expressed by equation (1) below. At this time, different bits are mapped to layers, respectively.

$$y_0(n) = x_0(2n)$$
$$y_1(n) = x_0(2n+1)$$
$$\cdots\cdots (1)$$

If a channel rank is equal to 2 when the transmitting device first transmits packet 1, packet 1 is transmitted through one to two layers. Although channel conditions change and a channel rank increases to 4 when the receiving device fails to receive packet 1 and the transmitting device retransmits packet 1, packet 1 must be transmitted by using only one to two ranks, in order to use chase combining. This implies that packet 1 must be precoded by a precoder designed so as to be suitable for a rank 2 channel. Accordingly, the loss of gain occurs in the process of transmitting packet 1 on a rank 4 channel.

In order to prevent this loss, the number of used layers must be able to be adjusted depending on a channel rank through layer adaptation.

Also, the above configuration may be implemented by using layers, the number of which is identical to that of layers in the case of the previous transmission when the transmitting device retransmits a packet. However, this restriction may cause difficulty in adaptive layer mapping or layer adaptation, and may limit transmission capacity of a link.

When it is possible to use more layers in the case of the retransmission than those in the case of the previous transmission although chase combining is used, the following embodiments of the present invention enable layer adaptation by allowing layer repetition, and propose a method and a device for increasing reception performance through this configuration.

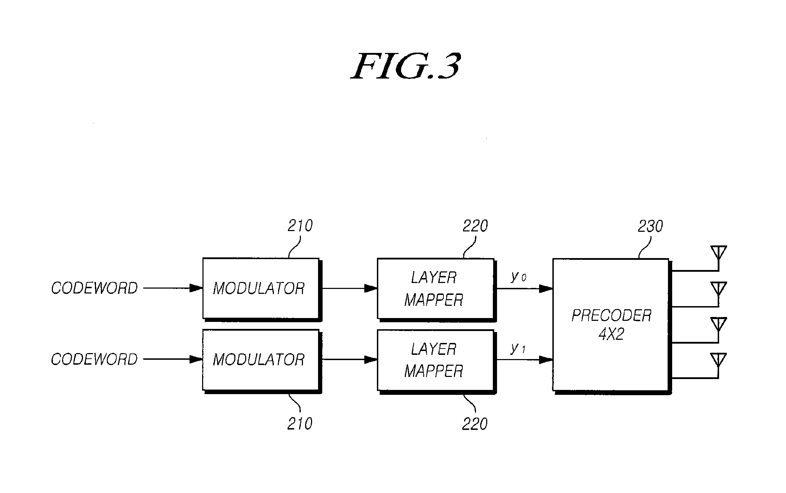

FIG. 3 is a block diagram illustrating an attempt for the first transmission on a rank 2 channel by a transmitting device.

A transmitting device shown in FIG. 3 is basically identical to the transmitting device shown in FIG. 2, in that the transmitting device shown in FIG. 3 includes a modulator 210, a layer mapper 220 and a precoder 230. In this case, if the number of antennas of the transmitting device is equal to 4 and a channel rank is equal to 2 when the transmitting device first transmits packet 1, packet 1 is transmitted through two layers. At this time, the precoder uses a 4x2 precoding matrix.

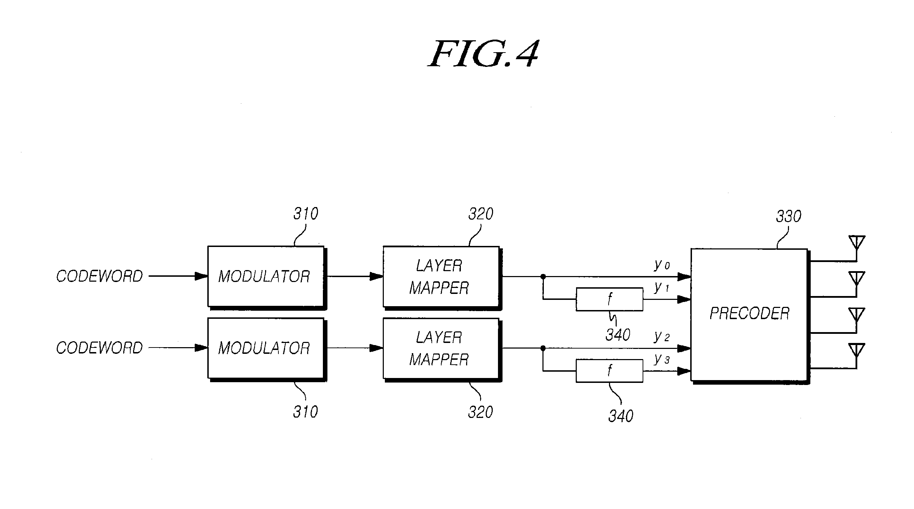

If channel conditions change and a channel rank increases to 4 when the receiving device fails to receive packet 1 and the transmitting device retransmits packet 1, packet 1 is retransmitted through four layers while chase combining is used, as shown in FIG. 4.

FIG. 4 is a block diagram illustrating an example where a transmitting device retransmits a packet through four layers if a channel rank increases to 4 when the transmitting device retransmits a packet.

A transmitting device shown in FIG. 4 is also basically identical to the transmitting device shown in FIG. 3, in that the transmitting device shown in FIG. 4 includes a modulator 310, a layer mapper 320 and a precoder 330.

However, the transmitting device shown in FIG. 4 differs from the transmitting device shown in FIG. 3, in that the number of transmission layers may be doubled by the layer repeater 340 arranged between the layer mapper 320 and the precoder 330. If channel conditions change and a channel rank increases to 4 when the receiving device fails to receive packet 1 and the transmitting device retransmits packet 1 through the layer repeater 340, packet 1 may be transmitted through four layers while chase combining is used.

Referring to FIG. 4 and equation (2), specifically, if a channel rank increases to 4 when the transmitting device retransmits a packet, the transmitting device performs layer repetition through the layer repeater 340, and retransmits the packet through four layers. To this end, use is made of a 4x4 precoding matrix suitable for a channel rank.

Mapping a codeword $x_0$ to four layers $y_0$, $y_1$, $y_2$ and $y_3$ is expressed by equation (2) below. At this time, a bit mapped to the layer $y_0$ is identical to a bit mapped to the layer $y_2$, and a bit mapped to the layer $y_1$ is identical to a bit mapped to the layer $y_3$.

$$y_0(n) = y_1(n) = x_0(2n)$$
$$y_2(n) = y_3(n) = x_0(2n+1) \qquad \cdots \cdots \quad (2)$$

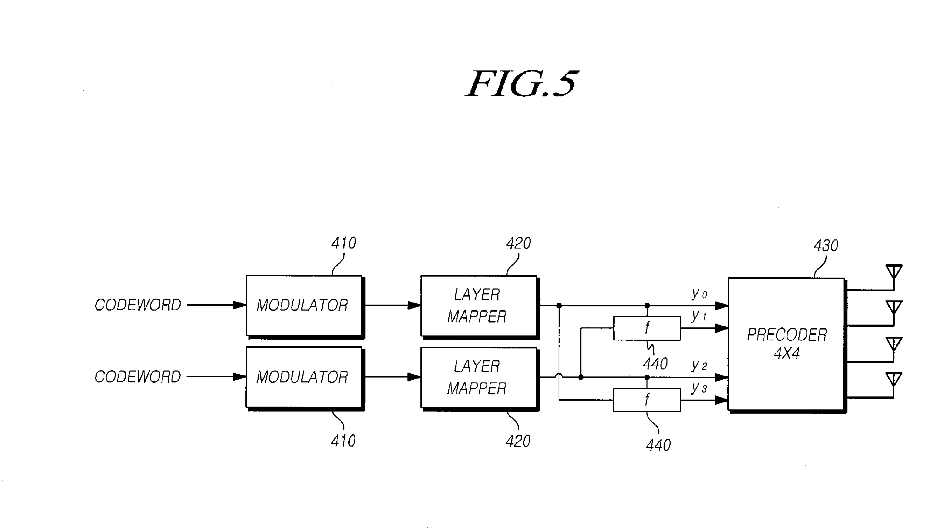

FIG. 5 is a block diagram illustrating another example where a transmitting device retransmits a packet through four layers if a channel rank increases to 4 when the transmitting device retransmits a packet.

A transmitting device shown in FIG. 5 is also basically identical to the transmitting device shown in FIG. 3, in that the transmitting device shown in FIG. 5 includes a modulator 410, a layer mapper 420 and a precoder 430.

Also, the transmitting device shown in FIG. 5 is identical to the transmitting device shown in FIG. 4, in that the transmitting device may double the number of transmission layers through a layer repeater 440 arranged between the layer mapper 420 and the precoder 430. However, there is a difference between methods for increasing the number of transmission layers by the layer repeater 440, as expressed in equations 3A to 3C below.

Referring to FIG. 5 and equations 3A to 3C below, if a channel rank increases to 4 when the transmitting device retransmits a packet, the transmitting device performs layer repetition, and retransmits the packet through four layers. To this end, use is made of a precoding matrix suitable for a channel rank.

Mapping a codeword $x_0$ to four layers $y_0$, $y_1$, $y_2$ and $y_3$ is expressed by equations 3A to 3C below. At this time, an even-numbered bit of the layer $y_0$ and an odd-numbered bit of the layer $y_2$ are mapped to the layer $y_1$, and an odd-numbered bit of the layer $y_0$ and an even-numbered bit of the layer $y_2$ are mapped to the layer $y_3$.

Namely, after the codeword x0 mapped as defined by equation 3A below, mapping may be performed as defined by equation 3B below or equation 3C below.

$$y_0(n) = x(2n) \quad \text{and} \quad y_2(n) = x(2n+1) \cdot \cdots \cdots \quad (3A)$$

$$y_1(n) = \begin{cases} y_0(n) & n = even \\ y_2(n) & n = odd \end{cases}$$
$$y_3(n) = \begin{cases} y_0(n) & n = odd \\ y_2(n) & n = even \end{cases} \qquad \cdots \cdots \cdots \quad (3B)$$

$$y_1(n) = \left(y_0(n) + y_2(n)\right)_{\text{mod}\,ul2}$$

$$y_3(n) = \left(y_0(n) - y_2(n)\right)_{\text{mod}\,ul2}$$

$$\cdots \cdots \quad (3C)$$

Meanwhile, first, encoded bits are mapped to layers, the number of which increases according to the increase of a channel rank, instead of the method for increasing the number of layers through layer repetition, etc. during the increase of a channel rank as described above. Then, the total amount of data which is identical to the total amount of data in the method as described above, is transmitted by reducing a bandwidth during the mapping of resources. In this manner, chase combining may be performed. Namely, layer adaptation may be supported through the allocation of resources, as will be described below.

In other words, in the wireless communication system transmitting information by using at least two antenna ports, the layer mapper of the transmitting device maps bits to be transmitted to at least one layer. When more layers may be used, the layer mapper of the transmitting device may replicate the bits mapped to the layer, and may map the replicated bits to another layer.

At this time, when both a precoder required to be used and data required to be transmitted have previously been selected and there occurs an imbalance between a rank of the precoder and a rank of the information intended to be transmitted, layer repetition may be performed on a layer of information intended to be transmitted, and the number of layers of the information may be increased in order to be equal to a rank of the precoder.

At this time, the transmitting device may be a user equipment or a base station.

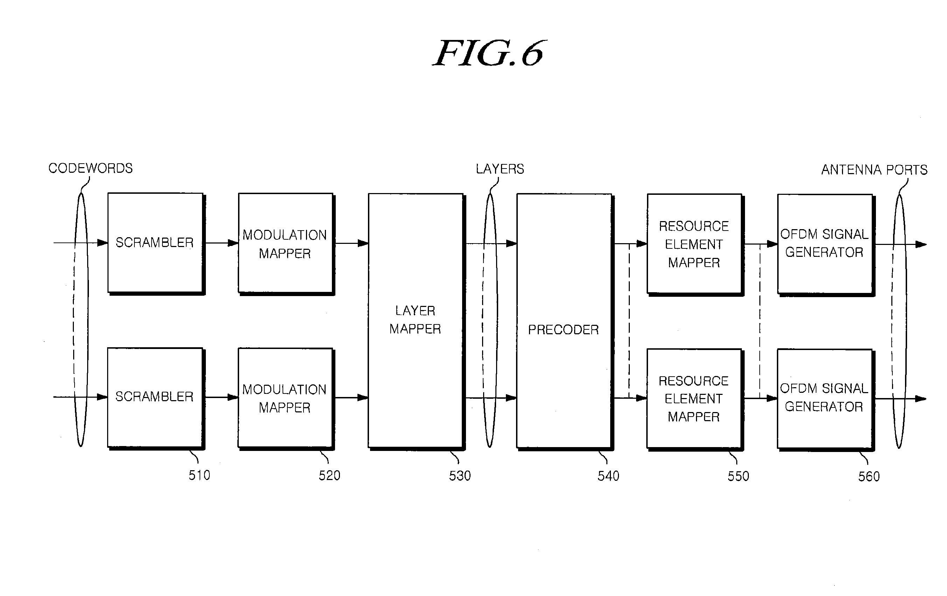

FIG. 6 is a block diagram illustrating a structure for signal generation of a downlink physical channel in a wireless communication system according to embodiments of the present invention.

Referring to FIG. 6, the wireless communication system according to embodiments of the present invention includes a scrambler 510, a modulation mapper 520, a layer mapper 530, a precoder 540, a resource element mapper 550, and an OFDM signal generator 560. The wireless communication system may be the communication system or the transmitting device of the base station 20 shown in FIG. 1. Although the structure for signal generation of a downlink physical channel in the wireless communication system, to which embodiments of the present invention are applied, has been described as above with reference to FIG. 6, the present invention is not limited to this configuration. Namely, in the structure for signal generation of a downlink physical channel in the wireless communication system, to which embodiments of the present invention are applied, other elements, which are different from the elements as described above, may be omitted, the elements may be replaced or changed with other elements, or other elements may be further included.

Bits which go through channel coding and are input in the form of codewords in a downlink, are scrambled by a scrambler 510 and are then input to a modulation mapper 520. The modulation mapper 520 modulates the scrambled bits to a complex modulation symbol, and the layer mapper 530 maps the complex modulation symbol to one transmission layer or multiple transmission layers. Then, the precoder 540 precodes the complex modulation symbol on each transmission channel of an antenna port. Then, the resource element mapper 550 maps a complex modulation symbol for each antenna port to a relevant resource element. Thereafter, the OFDM signal generator 560 generates a complex time domain OFDM signal for each antenna. The generated complex time domain OFDM signal is transmitted through the relevant antenna port.

If a channel rank increases as described above when the transmitting device retransmits a packet identical to the first transmitted packet after the receiving device fails to receive the first transmitted packet, the layer mapper 530 maps encoded bits to layers, the number of which increases according to the increase of a channel rank. Namely, when a channel rank increases from 2 to 4, the layer mapper 530 maps encoded bits to four layers. At this time, when one codeword is retransmitted after two codewords are transmitted, a channel rank may increase.

Meanwhile, in a MIMO scheme, the selection of a precoder (precoding matrix) and the adjustment of the size of transmission data may be performed by the following method.

Namely, first, a rank of the precoder is determined by measuring a channel rank. Then, the amount of data to be transmitted at one time is determined according to a rank of the precoder and a channel state. Next, the data is precoded, and then the precoded data is transmitted.

At this time, in order to perform chase combining when the precoded data is intended to be retransmitted, precoders used in the first transmission and retransmission must be identical to each other. At this time, when only one of the first transmitted two codewords is retransmitted, a rank of the precoder is for transmitting the two codeword, and thus is larger than a rank of the data intended to be retransmitted.

Namely, because both the precoder required to be used and the data required to be transmitted have previously been selected, this pre-selection causes inappropriateness in a rank of the precoder and the amount of the data intended to be transmitted. In order to solve this problem, the number of layers (rank) is increased by replicating each layer of data.

In other words, when the selection of the precoder is not based on information intended to be currently transmitted, there may occur an imbalance between a rank of the precoder and a rank of the information intended to be transmitted. In this case, layer repetition is performed on a layer of the information intended to be transmitted, and the number of layers of the information is forced to be increased in order to be equal to a rank of the precoder.

Then, accordingly, the precoder 540 precodes the information intended to be transmitted by using a 4x4 precoding matrix.

Meanwhile, the resource element mapper 550 reduces a bandwidth by half and allocates resources when the resource element mapper 550 allocates a precoded symbol to time and frequency resources. Therefore, the resource element mapper 550 causes the total amount of data during retransmission to be equal to the total amount of data during the first transmission. For example, during the first transmission, a bandwidth of 20 MHz is used, and the first transmission is performed by using two layers. If an available channel rank increases to 4 when the transmitting device retransmits a packet identical to the first transmitted packet after the receiving device fails to receive the first transmitted packet, the packet may be retransmitted by using only a bandwidth of 10 MHz and by using four layers.

When the transmitting device retransmits data which the layer mapper 530 has mapped to two layers when the data has been first transmitted, the data is mapped to four layers. Therefore, although the resource element mapper 550 reduces a bandwidth by half and allocates time and frequency resources when it allocates time and frequency resources, it is possible to transmit the total amount of data during the retransmission which is identical to the total amount of data during the first transmission. Accordingly, the receiving device may combine a retransmitted signal with a first transmitted signal in order to perform chase combining.

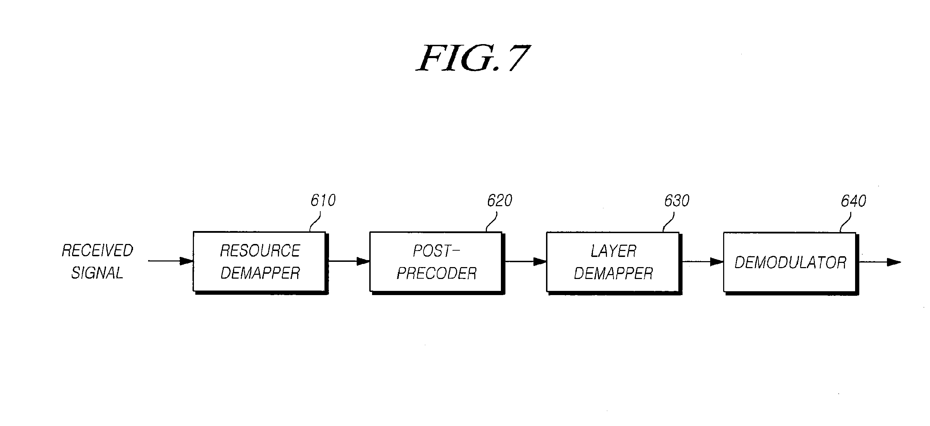

FIG. 7 is a block diagram illustrating the configuration of a receiving device in a wireless communication system according to an embodiment of the present invention.

Referring to FIG. 7, a receiving device in a wireless communication system according to an embodiment of the present invention includes a resource demapper 610, a post-precoder 620, a layer demapper 630, and a demodulator 640.

The resource demapper 610, the post-precoder 620, the layer demapper 630 and the demodulator 640 correspond to the modulation mapper 520, the layer mapper 530, the precoder 540 and the resource element mapper 550 as shown in FIG. 6, respectively. As noted in FIG. 7, elements corresponding to other elements of the transmitting device, which are different from the elements as described above, are omitted.

Namely, the resource demapper 610 demaps a resource element of a received signal to a complex modulation symbol. The post-precoder or post-decoder 620 post-decodes a complex modulation symbol mapped to a resource element.

The layer demapper 630 demaps the complex modulation symbol to one layer or two or more layers. The demodulator 640 demodulates the complex modulation symbol demapped to each layer to scrambled bits. The scrambled bits are descrambled by a descrambler, and then output in the form of a codeword.

At this time, when a packet is retransmitted by the transmitting device shown in FIG. 4 or FIG. 5, the receiving device shown in FIG. 7 may perform chase combining before and after each of the resource demapper 610, the post-precoder 620 and the layer demapper 630, through the demodulator 640. Because a received signal during the first transmission is identical to a received signal during the retransmission, chase combining may be performed even at any step.

Meanwhile, when a packet is retransmitted by the transmitting device shown in FIG. 6, the receiving device shown in FIG. 7 may perform chase combining after the post-precoder 620. This is because a received signal during the first transmission and a received signal during the retransmission are post-precoded by the post-precoder 620 and then both have an identical form.

As described above, the transmitting device shown in FIG. 4 or FIG. 5 employs a scheme for supporting HARQ chase combining through the operation of a physical layer which is called layer mapping. The transmitting device shown in FIG. 6 employs a scheme for performing layer mapping through resource allocation corresponding to an upper layer technique.

A common feature of the two schemes is that a precoder suitable for a channel rank can be used and the precoding increases diversity gain.

Meanwhile, the former scheme (layer adaptation scheme) obtains diversity gain and SNR gain through additional maximum ratio chase combining. In contrast, the latter scheme performs retransmission by using a smaller amount of resources, so that an increase in spectral efficiency can be expected.

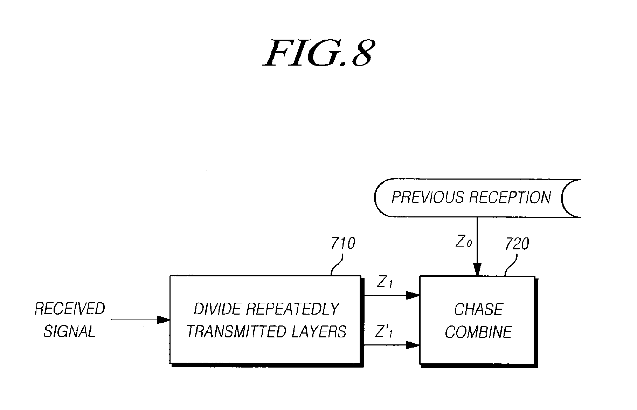

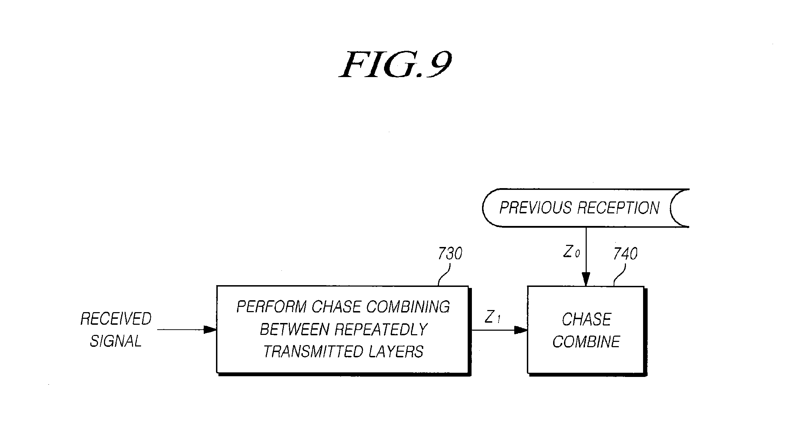

FIG. 8 and FIG. 9 are views showing the concept of chase combining a received signal during the first transmission and a received signal during retransmission, by a receiving device.

Referring to FIG. 8, the receiving device may perform chase combining 720 on three signals, such as two repeated signals ($Z_1$ and $Z'_1$ shown in FIG. 8), which have been generated by layer division 710 from received signals during retransmission, and a received signal ($Z_0$ shown in FIG. 8) during the previous transmission.

Referring to FIG. 9, the receiving device may perform chase combining 740 on a signal ($Z_1$ shown in FIG. 9), which has been obtained by first performing chase combining 730 on received signals between layers repeated during retransmission, and a received signal ($Z_0$ shown in FIG. 9) during the previous transmission.

According to embodiments of the present invention as described above, when a packet is retransmitted, layer repetition is performed in order to increase the number of layers. When a packet is received, chase combining may be performed on a first transmitted signal and signals obtained by dividing the retransmitted layers into an original layer, which is not repeated, and a repeated layer, to which the retransmitted signals are mapped. If layer repetition is performed twice or more in order to increase the number of layers from 2 to 6 when a packet is retransmitted, chase combining may be performed on four or more signals.

When a signal is retransmitted by using layers, the number of which is identical to the number of layers during the first transmission, although a channel rank increases, chase combining may be performed only on a first transmitted signal and a retransmitted signal.

According to embodiments of the present invention as described above, because identical information is transmitted through two or more layers, the receiving device may perform chase combining the number of times which is more than that in the existing schemes, when information is transmitted the same number of times. Accordingly, the receiving device can increase diversity gain.

Meanwhile, according to embodiments of the present invention as described above, the larger the number of layers becomes, the larger a precoding matrix becomes, so that precoding gain can be increased.

Meanwhile, a method for receiving information by the receiving device may include: receiving at least one bit, which is mapped to at least one layer and is then transmitted through the at least one layer, and at least one bit, which is first obtained by replicating the at least one bit, is then mapped to another layer, and is then transmitted through another layer; and performing chase combining on the at least two received bits, in a wireless communication system transmitting information by using at least two antenna ports. At this time, the receiving device may be a base station or a user equipment.

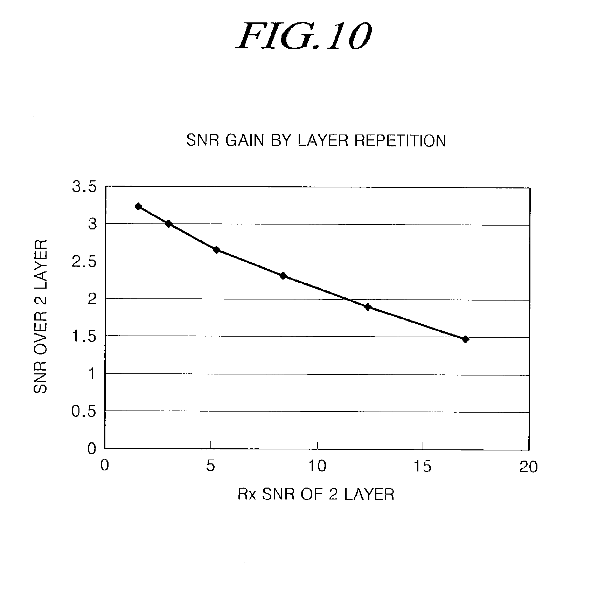

FIG. 10 is a graph obtained by comparing SNR after MMSE (Minimum Mean Square Error) in the case of transmitting information by using only two layers, with SNR (Signal-to-Noise Ratio) after a usually used MMSE precoding in the case of transmitting information by using two layers or by using four layers through layer repetition according to channel conditions. In FIG. 10, a horizontal axis represents a received SNR in the case of using two layers, and a vertical axis represents an SNR gain obtained through layer repetition by the methods as described above.

The SNR gain shown in FIG. 10, which is a gain obtained by using a suitable precoder, refers to a gain obtained by both a method of increasing the number of layers such as layer repetition and a method of reducing an available bandwidth and increasing the number of layers.

As described above, the embodiments of the present invention have been shown and described with reference to the accompanying drawings. Advantages of the embodiments of the present invention described in this specification are as follows.

Each of the Multi-Input Multi-Output (MIMO) scheme and the HARQ scheme for implementing high-speed information transmission in a commercial communication system through wireless communication, is capable of greatly increasing communication capacity, but requires high hardware complexity. Accordingly, when the two schemes are simultaneously used, there are problems in that the prices of a transmitter side and a receiver side increase and a delay occurs in the process of performing complex transmission and reception.

Also, techniques for simplifying an operation in order to implement a MIMO scheme and an HARQ scheme with relatively low complexity, have been developed. However, these techniques have a disadvantage in that they show lower performance than that of techniques which are optimized for performance.

The embodiments of the present invention described in this specification propose the MIMO HARQ technique which can appropriately respond to a change in a channel while maintaining advantages possessed by the existing techniques for simplification.

Although the embodiments of the present invention have been shown and described as above with reference to the accompanying drawings, the present invention is not limited to these embodiments.

Although the above embodiments of the present invention have described, for illustrative purposes, only the case where a channel rank has been equal to 2 when a packet has been first transmitted and a channel rank increases from 2 to 4 when the packet is retransmitted, an increased channel rank is not limited to this case. Also, although only the case of the increase of a channel rank has been described, the technical idea of the present invention may be equally applied even to a case where a channel rank is reduced.

Although the above embodiments of the present invention have described, for illustrative purposes, only the case where a base station transmits information to a user equipment, the present invention is not limited to this configuration. Accordingly, the technical idea of the present invention may be equally applied to either a case where a user equipment transmits information to a base station, to a case where a user equipment transmits/receives information to/from another user equipment, or to a case where information is transmitted through a relay. It goes without saying that the technical idea of the present invention may be equally applied to a case where information is transmitted/received between a user equipment and a base station through a relay.

Although the first transmission and the retransmission have been described for illustrative purposes in the above embodiments of the present invention, the technical idea of the present invention may be equally applied to the retransmission, re-retransmission, etc.

Although it has been described in the above that all the components of an embodiment of the present invention are coupled as a single unit or coupled to be operated as a single unit, the present invention is not necessarily limited to such an embodiment. Namely, within the purpose of the present invention, one or more components among the components may be selectively coupled to be operated as one or more units. Also, although each of the components may be implemented as an independent hardware, some or all of the components may be selectively combined with each other, so that they may be implemented as a computer program having one or more program modules for performing some or all of the functions combined in one or more hardwares. Codes and code segments forming the computer program can be easily conceived by an ordinarily skilled person in the technical field of the present invention. Such a computer program may implement the embodiments of the present invention by being stored in a computer-readable medium, and being read and executed by the computer. Storage mediums for storing the computer program may include a magnetic recording medium, an optical recording medium, a carrier wave medium, etc.

In addition, since terms, such as "including," "comprising," and "having" mean that one or more corresponding components may exist unless they are specifically described to the contrary, it shall be construed that one or more other components can be further included. All of the terminologies including one or more technical or scientific terminologies have the same meanings that those having ordinary knowledge in the technical field of the present invention understand ordinarily unless they are defined otherwise. A term ordinarily used like that defined by a dictionary shall be construed that it has a meaning equal to that in the context of a related description, and shall not be construed in an ideal or excessively formal meaning unless it is clearly defined in the present specification.

Although the exemplary embodiments of the present invention have been described for illustrative purposes, those having ordinary knowledge in the technical field of the present invention will appreciate that various modifications, additions and substitutions are possible, without departing from the scope and spirit of the invention as disclosed in the accompanying claims. Therefore, the embodiments disclosed in the present invention are intended to illustrate the scope of the technical idea of the present invention, and the scope of the technical idea of the present invention is not limited by the embodiments. The protection scope of the present invention should be construed based on the accompanying claims, and it should be construed that all of the technical ideas included within the scope equivalent to the claims are included within the right scope of the present invention.

CROSS-REFERENCE TO RELATED APPLICATION

This application claims priority from and the benefit under 35 U.S.C. §119(a) of Korean Patent Application No. 10-2009-0076940, filed on August 19, 2009, which is hereby incorporated by reference for all purposes as if fully set forth herein. In addition, this application claims priority in countries, other than the U.S., with the same reason based on the Korean Patent Application, which is hereby incorporated by reference for all purposes as if fully set forth herein.

**Claims**

1.  A method for transmitting information in a wireless communication system, the method comprising:

    mapping at least one bit to layers, the number of which is different from the number of layers used in a previous transmission, when the at least one bit, which is mapped to at least one layer and is then transmitted through the at least one layer, is retransmit; and
    retransmitting the at least one mapped bit.

2.  The method as claimed in claim 1, wherein the at least one bit is precoded before transmitting the at least one mapped bit, and is then transmitted.

3.  The method as claimed in claim 1, wherein the at least one bit is mapped to layers, the number of which is different from the number of layers used in the previous transmission, in a case of at least one of an increase or a reduction in a channel rank and an increase or a reduction in the number of available layers.

4.  The method as claimed in claim 1, wherein the at least one mapped bit is precoded and is then transmitted before the at least one mapped bit is retransmitted.

5.  The method as claimed in claim 2 or 4, wherein a precoding matrix, which is used when the at least one mapped bit is precoded before retransmitting the at least one mapped bit, has a rank suitable for a current channel rank during the retransmission.

6.  The method as claimed in claim 1, wherein, in mapping of the at least one bit to layers, the number of which is different from the number of layers used in the previous transmission, the number of the layers, the number of which is different, is larger than the number of the layers used in the previous transmission.

7. The method as claimed in claim 6, wherein, in mapping of the at least one bit to layers, the number of which is different from the number of layers used in the previous transmission, bits mapped to the layers used in the previous transmission are replicated and the replicated bits are mapped to the layers, the number of which has increased.

8. The method as claimed in claim 7, wherein the layers to which the replicated bits are mapped, are adjacent to each other or are not adjacent to each other.

9. The method as claimed in claim 8, further comprising allocating the at least one mapped bit to frequency resources; and
wherein, in allocating of the at least one mapped bit to the frequency resources, a bandwidth used during the retransmission is smaller than a bandwidth used during the previous transmission.

10. The method as claimed in claim 1, wherein the bits transmitted by the transmission and the retransmission are received and are chase combined by a receiver side.

11. A transmitting device in a wireless communication system, the transmitting device comprising:

a layer mapper for mapping encoded bits to one or more layers, and mapping the encoded bits to layers, the number of which is different from the number of previously used layers, when the encoded bits are retransmitted; and
a transmission unit for first transmitting the mapped bits, and retransmitting the encoded bits mapped to layers, the number of which is different from the number of the layers used in the previous transmission, when the encoded bits are retransmitted.

12. The transmitting device as claimed in claim 11, wherein the transmission unit corresponds to a precoder for precoding the mapped bits and transmitting the precoded bits before transmitting the mapped bits.

13. The transmitting device as claimed in claim 11, wherein the layer mapper maps the encoded bits to the layers, the number of which is different from the number of layers used in the previous transmission, when a channel rank increases or is reduced or when the number of available layers increases or is reduced.

14. The transmitting device as claimed in claim 11, wherein the precoder precodes the mapped bits and transmits the precoded bits before retransmitting the mapped bits.

15. The transmitting device as claimed in claim 12 or 14, wherein a precoding matrix, which the precoder uses to precode the mapped bits before retransmitting the mapped bits, has a rank suitable for a current channel rank during the retransmission.

16. The transmitting device as claimed in claim 11, wherein the number of the layers, the number of which is different, is larger than the number of the layers used in the previous transmission.

17. The transmitting device as claimed in claim 16, wherein the layer mapper replicates bits mapped to the layers used in the previous transmission, and maps the replicated bits to the layers, the number of which has increased.

18. The transmitting device as claimed in claim 17, wherein the layers to which the replicated bits are mapped, are adjacent to each other or are not adjacent to each other.

19. The transmitting device as claimed in claim 18, further comprising a resource mapper for allocating the mapped bits to frequency resources; and
wherein a bandwidth used during the retransmission is smaller than a bandwidth used during the previous transmission when the resource mapper allocates the mapped bits to the frequency resources

20. The transmitting device as claimed in claim 11, wherein the bits transmitted by the transmission and the retransmission are received and are chase combined by a receiver side.

21. A receiving device in a wireless communication system, the receiving device comprising:

a resource demapper for demapping a resource element to a complex modulation symbol;
a post-precoder for post-decoding a complex modulation symbol mapped to a resource element;
a layer demapper for demapping the complex modulation symbol to one layer or two or more layers; and
a demodulator for demodulating the complex modulation symbol demapped to each layer to scrambled bits,
wherein the demodulator combines a first transmitted signal with a retransmitted signal in order to perform chase combining before and after each of the resource demapper, the post-precoder, and the layer demapper.

22. The receiving device as claimed in claim 21, wherein the first transmitted signal is combined with the retransmitted signal in order to perform the chase combining after the post-precoder.

23. The receiving device as claimed in claim 21, wherein the chase combining is performed on two repeated signals, which have been generated by layer division from signals received during the retransmission through, and a signal received during the first transmission.

24. The receiving device as claimed in claim 21, wherein chase combining is again performed on a signal, which has been obtained by first performing chase combining on signals received during the retransmission, and a signal received during the first transmission.

25. A method for receiving information in a wireless communication system, the method comprising:

receiving a signal during first transmission;
receiving a signal during retransmission; and
performing chase combining on two repeated signals, which have been generated by layer division from the signal received during the retransmission, and the signal received during the first transmission.

26. The method as claimed in claim 25, wherein, in performing of the chase combining, the chase combining is again performed on a signal, which has been obtained by first performing the chase combining on the signals received during the retransmission, and the signal received during the first transmission.

27. A method for transmitting information by a transmitting device in a wireless communication system transmitting information by using at least two antenna ports, the method comprising:

mapping bits to be transmitted to at least one layer;
replicating the bits mapped to the at least one layer, and mapping the replicated bits to another layer; and
transmitting the bits, which have been mapped to the at least one layer and are replicated and are then mapped to another layer, to a receiving device.

28. The method as claimed in claim 27, wherein, in replicating of the bits mapped to the layer, and mapping of the replicated bits to another layer, layer repetition is performed on a layer of information intended to be transmitted, and the number of layers of the information is increased in order to be equal to a rank of a precoder, when both the precoder required to be used and data required to be transmitted have previously been selected and there occurs an imbalance between a rank of the precoder and a rank of the information intended to be transmitted.

29. The method as claimed in claim 27, wherein the transmitting device corresponds to a user equipment, and the receiving device corresponds to a base station.

30. A transmitting device in a wireless communication system transmitting information by using at least two antenna ports, the transmitting device comprising:

a layer mapper for mapping bits to be transmitted to at least one layer, and replicating the bits mapped to the at least one layer and mapping the replicated bits to another layer; and
a transmission unit for transmitting the bits which have been mapped to the at least one layer, and are replicated and are then mapped to another layer.

31. The transmitting device as claimed in claim 30, wherein layer repetition is performed on a layer of information intended to be transmitted, and the number of layers of the information is increased in order to be equal to a rank of a precoder, when both the precoder required to be used and data required to be transmitted have previously been selected and there occurs an imbalance between a rank of the precoder and a rank of the information intended to be transmitted.

32. The transmitting device as claimed in claim 30, wherein the transmitting device corresponds to a user equipment, and transmits the bits to a base station.

33. A method for adapting a layer by a transmitting device in a wireless communication system transmitting information by using at least two antenna ports, the method comprising:

mapping bits to be transmitted to at least one layer; and
replicating the bits mapped to the at least one layer and mapping the replicated bits to another layer, when more layers are usable.

34. The method as claimed in claim 33, wherein layer repetition is performed on a layer of information intended to be transmitted, and the number of layers of the information is increased in order to be equal to a rank of a precoder, when both the precoder required to be used and data required to be transmitted have previously been selected and there occurs an imbalance between a rank of the precoder and a rank of the information intended to be transmitted.

35. The method as claimed in claim 33, wherein the transmitting device corresponds to a user equipment.

36. A layer mapper of a transmitting device in a wireless communication system transmitting information by using at least two antenna ports, the layer mapper comprising:

mapping bits to be transmitted to at least one layer to; and
replicating the bits mapped to the at least one layer and mapping the replicated bits to another layer, when more layers are usable.

37. The layer mapper as claimed in claim 36, wherein layer repetition is performed on a layer of information intended to be transmitted, and the number of layers of the information is increased in order to be equal to a rank of a precoder, when both the precoder required to be used and data required to be transmitted have previously been selected and there occurs an imbalance between a rank of the precoder and a rank of the information intended to be transmitted.

38. The layer mapper as claimed in claim 36, wherein the transmitting device corresponds to a user equipment.

39. A method for receiving information by a receiving device in a wireless communication system transmitting information by using at least two antenna ports, the method comprising:

receiving at least one bit, which is mapped to at least one layer and is then transmitted through the at least one layer, and at least one bit, which is obtained by replicating the former at least one bit and is mapped to another layer, and is then transmitted through another layer; and
performing chase combining on the at least two received bits.

40. The method as claimed in claim 39, wherein the receiving device corresponds to a base station.

# FIG.1

EP 2 469 722 A2

# FIG.2

EP 2 469 722 A2

# FIG.3

## FIG.4

EP 2 469 722 A2

CODEWORD → MODULATOR (310) → LAYER MAPPER (320) → $y_0$, $y_1$ (f, 340) → PRECODER (330) → antennas

CODEWORD → MODULATOR (310) → LAYER MAPPER (320) → $y_2$, $y_3$ (f, 340) → PRECODER (330)

*FIG.5*

# FIG.6

CODEWORDS
LAYERS
ANTENNA PORTS

SCRAMBLER → MODULATION MAPPER → LAYER MAPPER → PRECODER → RESOURCE ELEMENT MAPPER → OFDM SIGNAL GENERATOR

SCRAMBLER → MODULATION MAPPER → LAYER MAPPER → PRECODER → RESOURCE ELEMENT MAPPER → OFDM SIGNAL GENERATOR

510      520      530      540      550      560

EP 2 469 722 A2

EP 2 469 722 A2

# FIG.7

RECEIVED SIGNAL → | RESOURCE DEMAPPER | *610* → | POST-PRECODER | *620* → | LAYER DEMAPPER | *630* → | DEMODULATOR | *640* →

# FIG.8

PREVIOUS RECEPTION

RECEIVED
SIGNAL →

DIVIDE REPEATEDLY
TRANSMITTED LAYERS

710

$Z_1$

$Z'_1$

$Z_0$

720

CHASE
COMBINE

# FIG.9

RECEIVED
SIGNAL →

| 730 |
| --- |
| PERFORM CHASE COMBINING BETWEEN REPEATEDLY TRANSMITTED LAYERS |

$Z_1$ →

PREVIOUS RECEPTION

$Z_0$ | 740

| CHASE COMBINE |

# *FIG.10*

SNR GAIN BY LAYER REPETITION

**REFERENCES CITED IN THE DESCRIPTION**

**Patent documents cited in the description**

- KR 1020090076940